# EUROPÄISCHE PATENTSCHRIFT

(11) **EP 1 836 432 B1**
(45) Veröffentlichungstag und Bekanntmachung des Hinweises auf die Patenterteilung: **26.09.2012**
(21) Anmeldenummer: 05807847.8
(22) Anmeldetag: 09.11.2005
(51) Int. Cl.: F16L 41/08

(54) **ARMATUR ZUR BILDUNG EINES FLUIDFÜHRENDEN ANSCHLUSSES**
FITTING FOR FORMING A FLUID-CONDUCTING CONNECTION
ARMATURE SERVANT A FORMER UN RACCORD FLUIDIQUE

(30) Priorität: 14.01.2005 DE 102005001828
(43) Veröffentlichungstag der Anmeldung: 26.09.2007
(73) Patentinhaber: HYDAC FILTERTECHNIK GMBH, 66280 Sulzbach/Saar (DE)
(72) Erfinder: WILKENDORF, Werner, 66564 Ottweiler (DE)
(74) Vertreter: Bartels, Martin Erich Arthur
(86) Internationale Anmeldenummer: PCT/EP2005/011960
(87) Internationale Veröffentlichungsnummer: WO 2006/074726

(56) Entgegenhaltungen:
- EP-A- 0 874 187
- WO-A-01/21966
- FR-A- 2 623 253
- PATENT ABSTRACTS OF JAPAN Bd. 1995, Nr. 06, 31. Juli 1995 (1995-07-31) -& JP 07 071404 A (HITACHI CONSTR MACH CO LTD), 17. März 1995 (1995-03-17)

## Beschreibung

Die Erfindung bezieht sich auf eine Armatur zur Bildung eines fluidführenden Anschlusses an einer Öffnung in der Wand eines Behälters aus Kunststoff, insbesondere eines Tanks zur Aufnahme eines Fluides, namentlich einer Hydraulikflüssigkeit gemäß der Merkmalsausgestaltung des Oberbegriffes des Patentanspruches 1.

In Hydrosystemen werden zur Aufnahme von Hydraulikflüssigkeiten vielfach Kunststofftanks eingesetzt. Wegen der Möglichkeit der verhältnismäßig einfachen Formgebung, des geringen Gewichts und der Korrosionsbeständigkeit finden Kunststofftanks verbreitete Anwendung namentlich bei Hydrosystemen von Arbeitsmaschinen wie Baggern, Radladern und dergleichen.

Üblicherweise werden solche Tanks nach dem bekannten Rotationsform- oder einem Blasformverfahren hergestellt, wobei für größere Behälter, wie Tanks für Hydraulikflüssigkeiten, beispielsweise PE- oder PA-Kunststoffmaterial benutzt wird.

Den Vorteilen der Korrosionsbeständigkeit des geringen Gewichts und der leichten Formbarkeit steht bei Kunststofftanks jedoch der Nachteil gegenüber, dass die Herstellung fluidführender Anschlüsse an Öffnungen in der aus Kunststoff gebildeten Wand des Behälters oder Tanks Schwierigkeiten bereitet. Aufgrund der physikalischen Eigenschaften des Kunststoffmaterials besteht die Gefahr, dass durch Dichtungskräfte und Temperatureinflüsse Deformierungen am Öffnungsbereich stattfinden, die selbst dann, wenn aufwendige Dichtelemente zum Einsatz kommen, zu Undichtigkeiten zwischen Kunststofftank und Anbauteilen führen.

Durch die WO 01/21966 A ist eine Warmeinsatzverbindung bekannt, wobei die zwischen einem Aufnahmeteil und einem Einsatzteil entstehende Fuge durch Einsatz einer Dichtung abgedichtet ist. Die Dichtung liegt an Wirkflächen an, die eine Nut zur Aufnahme der Dichtung bildet. Die Dichtung wird erst nach der Montage des Warmeinsatzteils und dessen Abkühlung eingesetzt, so dass diese während des Warmeinsatzvorganges nicht thermisch belastet ist. Durch die dahingehende Anordnung ist eine gasdichte Warmeinsatzverbindung geschaffen.
Diese bekannte, gattungsgemäße Lösung stellt eine Armatur zur Bildung eines fluidführenden Anschlusses an einem Behälter aus Kunststoff dar, mit einem Anschlußteil in Form eines Hohlkörpers mit einem Mantel, der sich entlang einer Längsachse des Hohlkörpers zwischen Enden desselben erstreckt, welcher Hohlkörper in den Kunststoff der Wand des Behälters derart eingebettet ist, dass ein offenes Ende des Hohlkörpers am Rand einer Öffnung des Behälters und ein Teilbereich des Mantels des Hohlkörpers von der Kunststoffwand des Behälters umgeben sind. Obwohl bei der bekannten Lösung eine Fuge durch Einsatz einer Dichtung abgedichtet ist, die im übrigen während des Warmeinsatzvorganges unter Beibehalten ihrer Dichtleistung nicht thermisch belastet wird, läßt die bekannte Lösung, was eine betriebssichere, langzeitig leckagefreie Anschlußverbindung an einer Öffnung eines Kunststoffbehälters anbelangt, noch Wünsche offen.

Des weiteren ist durch PATENT ABSTRACTS OF JAPAN Bd. 1995, Nr. 06, 31.Juli 1995 (1995-07-31) & JP 07 077404 A (HITACHI CONSTR MACH CO LTD), 17.März 1995 (1995-03-17) ein sog. Tank-Top-Filter bekannt, bei dem in einem hydraulischen Speichertank als Behälter ein separates Filtergehäuse eingesetzt ist, das bodenseitig eine Zulauföffnung für Fluid aufweist und eine Abgabeöffnung, die sowohl die Behälterwand als auch die Filtergehäusewand durchgreift, die oberhalb eines Filtereinsatzes innerhalb des Filtergehäuses angeordnet ist, in welches ein austauschbares Filterelement von der oberen Ausgangsseite des Behälters her zugänglich für einen Filtervorgang eingesetzt ist. Aufgrund der dahingehend bekannten Anordnung läßt sich in einfacher und rascher Weise das Filterelement im Verbrauchsfall gegen ein Neuelement tauschen; allein ist die bekannte Lösung empfindlich gegen Deformation, wie sie unter anderem aufgrund von dynamischen Schwingungseinflüssen und/oder thermischen Einflüssen hervorgerufen wird, was die Betriebssicherheit der bekannten Lösung beeinträchtigt.

Ausgehend von diesem Stand der Technik stellt sich die Erfindung die Aufgabe, eine Armatur zur Verfügung zu stellen, die eine betriebssichere, langzeitig leckagefreie Anschlußverbindung an einer Öffnung des Kunststoffbehälters ermöglicht.

Erfindungsgemäß ist diese Aufgabe durch eine Armatur gelöst, die die Merkmale des Patentanspruches 1 in seiner Gesamtheit aufweist.

Danach stellt die erfindungsgemäße Armatur mit dem in den Kunststoff der Wand des Behälters eingebetteten Anschlußteil in Form eines Hohlkörpers ein Verstärkungselement zur Verfügung, das aufgrund der großflächigen Einbettung in das Kunststoffmaterial des Tanks, das den Hohlkörper nicht nur an seinem offenen Ende an der Öffnung des Behälters umgibt, sondern sich auch über zumindest Teilbereiche des Mantels des Hohlkörpers erstreckt, eine strukturfeste Basis für die Anbringung von Anbauteilen, wie Anschlüsse und/oder Verschlußelemente, bildet. Der vorzugsweise aus metallischem Werkstoff gefertigte Hohlkörper ermöglicht nicht nur die betriebssichere Verbindung mit Anschluß- oder Anbauteilen, die Bestandteil eines zugehörigen Hydraulikssystemes bilden, sondern trägt auch zur Verstärkung desjenigen Bereiches des Kunststoffbehälters oder -tanks bei, der sich im Bereich der Öffnung befindet.

Der Hohlkörper weist zur Bildung eines fluidführenden Anschlusses in einem Abstand von den Enden des Hohlkörpers einen sich vom Mantel ausgehend quer zur Längsachse erstreckenden Anschlußstutzen auf, der im Mantel des Hohlkörpers einen Fluiddurchlaß bildet und sich in einem Abstand von der Öffnung des Behälters, dessen Wand durchdringend, nach außen erstreckt.

Das die Wand des Behälters durchdringende Ende des Anschlußstutzens ist über die Außenseite der Wand des Behälters nach außen überstehend ausgebildet, wobei der Anschlußstutzen in den Kunststoff der Wand des Behälters so eingebettet ist, dass der überstehende Teil des Anschlußstutzens zumindest teilweise vom Kunststoff umgeben ist. Die auf diese Art erreichte, vollflächige Einbettung von Hohlkörper und Anschlußstutzen gewährleistet eine besonders hohe Strukturfestigkeit.

Wenn der Hohlkörper, der mit dem Anschlußstutzen vorzugsweise einstükkig ausgebildet ist, aus einem metallischen Werkstoff gebildet ist, schützt der großflächig eingebettete Hohlkörper das Kunststoffmaterial der Behälterwand sicher gegen Deformation, weil die am Hohlkörper wirkenden Belastungen wie Befestigungskraft, Dichtungskraft, dynamische (Schwingungen) und thermische Einflüsse zum einen keine Deformation des strukturfesten Hohlkörpers selbst bewirken und zum anderen diese Belastungen nicht unmittelbar am Kunststoffmaterial des Behälters angreifen, sondern über den gesamten Bereich der Einbettung des Hohlkörpers großflächig in den Behälter eingeleitet werden.

Bei bevorzugten Ausführungsbeispielen ist der Hohlkörper in der Art eines Kreiszylinders gestaltet und weist in geringem Abstand von dem der Öffnung des Behälters zugeordneten Ende einen Flansch auf, der am Rand der Öffnung in den Kunststoff so eingebettet ist, dass er außenseitig von der sich entlang des Mantels des Hohlkörpers erstreckenden Werkstoffpartie des Kunststoffes vollständig umgeben ist. Dadurch ergibt sich eine besonders gute Verankerung des Hohlkörpers gegen entlang der Längsachse des Hohlkörpers wirkende Axialkräfte.

Bei Ausführungsbeispielen, bei denen die Öffnung des Behälters mittels eines beispielsweise deckelartigen Verschlußelementes dicht verschließbar ist, kann der Hohlkörper so eingebettet sein, dass sein Ende über den Rand der Öffnung des Behälters nach außen übersteht und dass am überstehenden Ende eine Dichtungsanordnung für eine Dichtverbindung mit dem Verschlußelement vorgesehen ist.

Alternativ kann der Hohlkörper in der Nähe seines der Öffnung des Behälters zugeordneten Endes in seiner Innenfläche eine Ringnut als Sitz für ein ringförmiges Dichtelement aufweisen, das mit einer Ringfläche abdichtend zusammen wirkt, die sich von einem an der Öffnung anbringbaren Verschlußelement ins Innere des Hohlkörpers erstreckt.

Bei einem Verschlußelement in Form eines Deckels kann dieser auch einen über den Rand des Hohlkörpers hinaus radial vorspringenden Teil aufweisen, an dem eine Dichtungsanordnung vorgesehen ist, um eine Abdichtung mit der die Öffnung umgebenden Wand des Behälters zu bilden.

An seinem von der Öffnung des Behälters abgekehrten Ende kann der Hohlkörper einen Sitz für die Aufnahme eines Tank-Top-Filters aufweisen, der, beispielsweise für seine Auswechslung, über die bei angenommenem Verschlußeleinent freigegebene Öffnung des Behälters zugänglich ist.

Nachstehend ist die Erfindung anhand von in der Zeichnung dargestellten Ausführungsbeispielen im Einzelnen erläutert. Es zeigen:
- Fig. 1 einen Vertikalschnitt nur eines oberen Teilbereiches eines Behälters in Form eines Kunststofftankes, der zur Aufnahme einer Hydraulikflüssigkeit vorgesehen und mit einer ein Ausführungsbeispiel der Erfindung darstellenden Armatur versehen ist, die auch eine Aufnahme für einen Tank-Top-Filter bildet, und
- Fig. 2 einen der Fig. 1 entsprechenden Vertikalschnitt eines zweiten Ausführungsbeispieles.

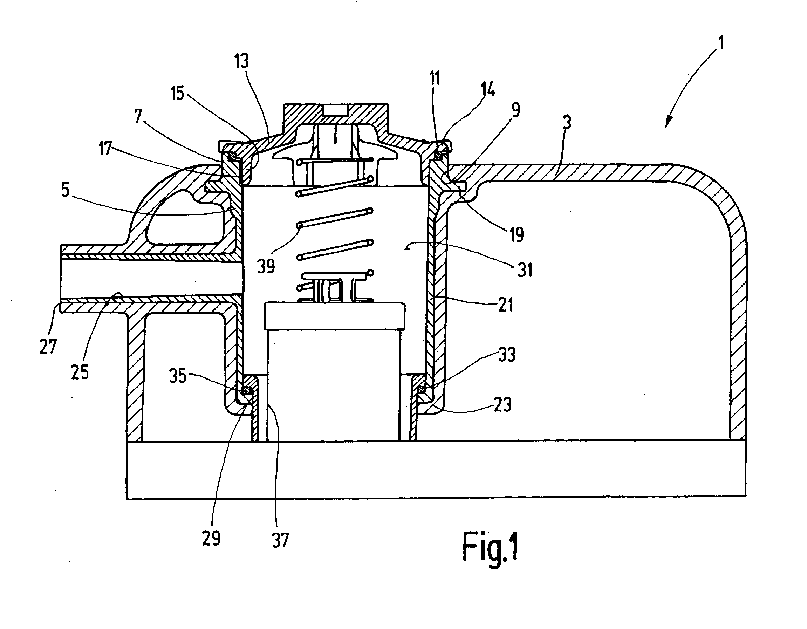

Fig. 1 zeigt den oberen Bereich eines Behälters in Form eines Kunststofftanks 1, der nach dem bekannten Rotationsformverfahren (vgl. Schaab/Stoeckhert, "Kunststoff Maschinenführer", Seite 561-564) aus einem für größere Behälter geeigneten Kunststoffwerkstoff hergestellt ist. Beim Vorgang des Rotationsformens ist in die Kunststoffwand 3 ein in Art eines Kreiszylinders geformter Hohlkörper 5 so eingeformt, dass der Hohlkörper 5 mit seinem in der Zeichnung oberen Ende 7 an der Innenseite einer Öffnung 9 in der Wand 3 des Tanks 1 anliegt. Bei dem in Fig. 1 gezeigten Beispiel, steht das Ende 7 des Hohlkörpers 5 über die Außenseite der Wand 3 geringfügig über, wobei am überstehenden Ende ein Dichtring 11 vorgesehen ist, der in Zusammenwirkung mit einem Verschlußelement in Form eines Schraubdeckels 13 einen dichten Verschluß am betreffenden Ende 7 des Hohlkörpers 5 und damit einen Verschluß der Öffnung 9 der Behälterwand 3 ermöglicht.

Der Deckel 13 weist einen Gewindeteil in Form eines mit Außengewinde versehenen Ringkörpers 15 auf, der mit einem Innengewinde 17 an der Innenfläche des Hohlkörpers 5 verschraubbar ist.

Beim gezeigten Ausführungsbeispiel ist der Hohlkörper 5 durch Pressformen aus einem metallischen Werkstoff einstückig gefertigt und weist in der Nähe seines Endes 7 außenseitig einen umfänglichen Flansch 19 auf. Etwa im mittleren Bereich seines Mantels 21 zwischen oberem Ende 7 und unterem Ende 23 erstreckt sich vom Mantel 21 ein einstückig mit diesem geformter Anschlußstutzen 25 im rechten Winkel zur Längs- oder Zylinderachse des Hohlkörpers 5, wobei die Wandstärke des Stutzens 25, vom Mantel 21 ausgehend bis zum freien Ende 27, geringfügig abnimmt, was bei der Herstellung des Hohlkörpers 5 durch Pressformen das Ausformen des Werkstückes begünstigt. An seinem unteren Ende 23 weist der Mantel 21 des Hohlkörpers 5 einen radial nach innen geringfügig vorspringenden Endrand 29 auf, der den Durchmesser der betreffenden Öffnung des kreiszylindrischen Innenraumes 31 des Hohlkörpers 5 geringfügig verringert und eine Ringschulter 33 bildet, die einen Sitz für einen handelsüblichen Tank-Top-Filter 37 bildet, der sich über einen Dichtring 35 an der Ringschulter 33 abstützt. Eine zwischen der Oberseite des Filters 37 und dem Deckel 13 eingespannte Druckfeder 39 hält den Filter 37 kraftschlüssig am Sitz.

Wie aus der Zeichnung klar ersichtlich ist, ist der Hohlkörper 5 in den Kunststoff der Behälterwand 3 so eingebettet, dass der Hohlkörper 5 am oberen Ende 7 vom Kunststoff an den gesamten Außenflächen des Flansches 19 umgeben ist und dass sich der Kunststoff entlang des Mantels 21 des Hohlkörpers 5 bis zum unteren Ende 23 erstreckt, wo der Kunststoff auch den unteren Endrand 29 des Mantels 21 übergreift. Weiterhin ist der Anschlußstutzen 25 nicht nur auf seinem Abschnitt zwischen Mantel 21 und Innenseite der Behälterwand 3 vom Kunststoff vollständig umgeben, sondern der Kunststoff der Wand 3 umgibt den Anschlußstutzen 25 auch an der Außenseite des Tanks 1. Wie bereits erwähnt, bildet der Hohlkörper 5 ein Anschlußteil für Anbauteile, beispielsweise einen Fluidanschluß am Ende des Anschlußstutzen 25, wobei dieser Anschlußteil als Verstärkungselement wirkt, das aufgrund der großflächigen Umhüllung mit dem Kunststoffmaterial der Behälterwand 3 an ihm wirkende Kräfte mit so geringer, spezifischer Flächenpressung in das Kunststoffmaterial des Tanks 1 einleitet, dass Deformationen des Tanks vermieden sind.

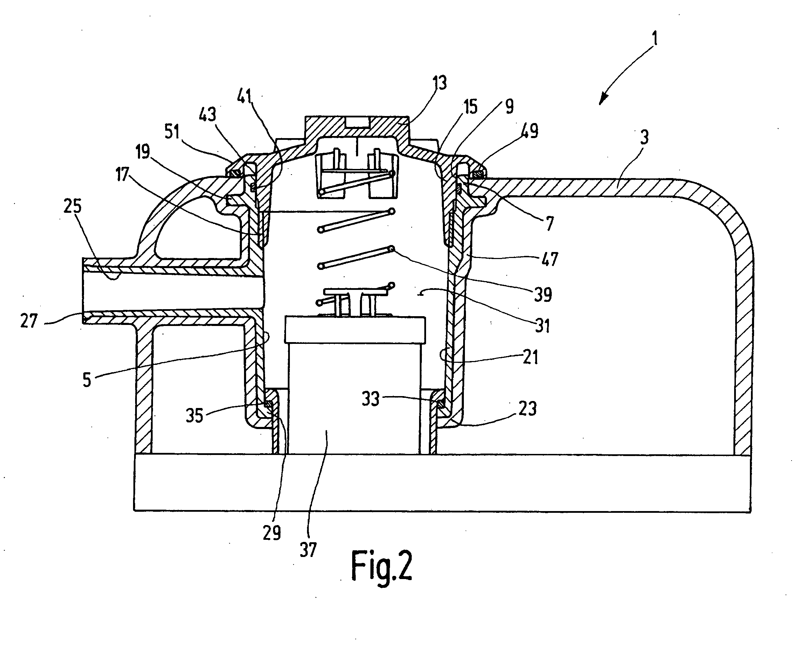

Das in Fig. 2 dargestellte Ausführungsbeispiel unterscheidet sich gegenüber dem Beispiel von Fig. 1 lediglich insofern, als die Dichtungsanordnung zwischen Deckel 13 und dem oberen Ende 7 des Hohlkörpers 5 anders gestaltet ist. Bei dem Beispiel von Fig. 2 ist das obere Ende 7 des Hohlkörpers 5 mit der Außenseite der Kunststoffwand 3 des Tanks 1 im wesentlichen bündig. Anstelle der Dichtungsanordnung 11, wie sie beim Beispiel von Fig. 1 als Axialdichtung zwischen Hohlkörper 5 und Deckel 13 vorgesehen ist, befindet sich bei dem Beispiel von Fig. 2 in der Nähe des Endes 7 an der Innenfläche des Hohlkörpers 5 eine Ringnut, in der eine Radialdichtung 41 sitzt. Diese wirkt mit einer Ringfläche 43 zusammen, die sich am Ringkörper 15 des Deckels 13 befindet. Dieser Ringkörper 15, der sich in den Innenraum 31 des Hohlkörpers 5 erstreckt, weist im Anschluß an seine gewindefreie Ringfläche 43, die mit der Dichtung 41 zusammenwirkt, einen Abschnitt mit Aussengewinde 47 auf, der mit dem Innengewinde 17 des Hohlkörpers 5 verschraubbar ist.

Zusätzlich zu der Radialdichtung 41 erfolgt die Dichtverbindung zwischen Deckel 13 und Behälter 1 mittels einer Axialdichtung 49. Diese sitzt in einer Ringnut an der der Wand 3 zugewandten Fläche eines Umfangsrandes 51 des Deckels 13. Dieser Umfangsrand 51 springt radial über das obere Ende 7 des Hohlkörpers 5 weiter vor als dies bei dem Umfangsrand 14 des ersten Ausführungsbeispieles der Fall ist. Die Axialdichtung 49 wirkt daher beim Beispiel von Fig. 2 unmittelbar mit der Außenseite der Wand 3 des Tanks 1 zusammen.

Bei den in den Fig. dargestellten und vorstehend beschriebenen Beispielen befindet sich an dem der Öffnung 9 der Behälterwand zugeordneten Ende 7 des Hohlkörpers 5 ein Verschlußelement in Form eines Deckels 13. Die Öffnung 9 in der Wand 3 des Behälters 1 dient bei diesen Beispielen als Zugangsöffnung für den Tank-Top-Filter 37, während zur Bildung eines fluidführenden Anschlusses der mit dem Innenraum 31 des Hohlkörpers 5 in Verbindung stehende Anschlußstutzen 25 vorgesehen ist. Es versteht sich, dass anstelle des Deckels 13 andersartige Anschluß- und/oder Anbauteile an dem durch den Hohlkörper 5 gebildeten Anschlußteil befestigt sein könnten. So könnte beispielsweise auch anstelle des Deckels 13 ein Anschlußkopf eines Tank-Top-Filters am zugeordneten Ende 7 des Hohlkörpers 5 befestigt sein. In jedem Falle ergeben sich auch bei solchen Ausführungsbeispielen die erwähnten Vorteile aufgrund des Vorhandenseins eines Anschlußteiles in Form eines großflächig in das Kunststoffmaterial der Wand 3 des Tanks 1 eingebetteten Hohlkörpers 5.

## Patentansprüche

1. Armatur zur Bildung eines fluidführenden Anschlusses an einem Behälter (1) aus Kunststoff, insbesondere einem Tank zur Aufnahme eines Fluides, namentlich einer Hydraulikflüssigkeit, mit einem Behälter (1) aus Kunststoff und einem Anschlußteil in Form eines Hohlkörpers (5) mit einem Mantel (21), der sich entlang einer Längsachse des Hohlkörpers (5) zwischen Enden (7, 23) desselben erstreckt, welcher Hohlkörper (5) in den Kunststoff der Wand (3) des Behälters (1) so eingebettet ist, dass ein offenes Ende (7) des Hohlkörpers (5) am Rand einer Öffnung (9) des Behälters (1) und zumindest ein Teilbereich des Mantels (21) des Hohlkörpers (5) vom Kunststoff der Wand (3) des Behälters (1) umgeben sind, **dadurch gekennzeichnet, dass** der Hohlkörper (5) in einem Abstand von dessen Enden (7, 23) einen sich vom Mantel (21) ausgehend quer zur Längsachse erstreckenden Anschlußstutzen (25) aufweist, der im Mantel (21) des Hohlkörpers (5) einen Fluiddurchlass bildet und sich, die Wand (3) des Behälters (1) durchdringend, nach außen erstreckt und dass das die Wand (3) des Behälters (1) durchdringende Ende (27) des Anschlußstutzens (25) über die Außenseite der Wand (3) des Behälters (1) nach außen überstehend ausgebildet und in den Kunststoff der Wand (3) des Behälters (1) so eingebettet ist, dass der überstehende Teil des Anschlußstutzens (25) zumindest teilweise vom Kunststoff umgeben ist.

2. Armatur nach Anspruch 1, **dadurch gekennzeichnet, dass** der Hohlkörper (5) mit dem Anschlußstutzen (25) einstückig ausgebildet und aus einem metallischen Werkstoff gebildet ist.

3. Armatur nach Anspruch 1 oder 2, **dadurch gekennzeichnet, dass** der sich von der Innenseite der Wand (3) des Behälters (1) bis zum Mantel (21) des Hohlkörpers (5) erstreckende Teil des Anschlußstutzens (25) außenseitig ganzflächig von Kunststoff umgeben ist, so dass sich eine ununterbrochene Kunststoffstruktur ausgehend von der den Mantel (21) des Hohlkörpers (5) umgebenden Werkstoffpartie entlang des Anschlußstutzens (25) zur Wand (3) des Behälters (1) und über dessen Außenseite hinaus entlang des überstehenden Teiles des Anschlußstutzens (25) erstreckt.

4. Armatur nach einem der Ansprüche 1 bis 3, **dadurch gekennzeichnet, dass** der Hohlkörper (5) in der Art eines Kreiszylinders gestaltet ist und in geringem Abstand von dem der Öffnung (9) des Behälters (1) zugeordneten Ende (7) einen Flansch (19) aufweist, der am Rand der Öffnung (9) in den Kunststoff so eingebettet ist, dass er aussenseitig von der sich entlang des Mantels (21) des Hohlkörpers (5) erstreckenden Werkstoff partie des Kunststoffes vollständig umgeben ist.

5. Armatur nach Anspruch 4, **dadurch gekennzeichnet, dass** der Hohlkörper (5) so eingebettet ist, dass sein Ende (7) über den Rand der Öffnung (9) des Behälters (1) nach außen übersteht und dass das überstehende Ende (7) eine Dichtungsanordnung (11) für eine Dichtverbindung mit einem Verschlußelement (13) aufweist, das zum Verschluß an der Öffnung (9) des Behälters (1) anbringbar ist.

6. Armatur nach Anspruch 4, **dadurch gekennzeichnet, dass** der Hohlkörper (5) in der Nähe seines der Öffnung (9) des Behälters (1) zugeordneten Endes (7) in seiner Innenfläche eine Ringnut als Sitz für ein ringförmiges Dichtelement (41) aufweist, das mit einer Ringfläche (43) abdichtend zusammenwirkt, die sich von einem an der Öffnung(9) anbringbaren Verschlußelement (13) ins Innere des Hohlkörpers (5) erstreckt.

7. Armatur nach Anspruch 5 oder 6, **dadurch gekennzeichnet, dass** als Verschlußelement ein Deckel (13) mit einem mit Außengewinde versehenen Gewindeteil (47) in Form eines in ein Innengewinde (17) an der Innenfläche des Hohlkörpers (5) einschraubbaren Ringkörpers (15) vorgesehen ist.

8. Armatur nach den Ansprüchen 6 und 7, **dadurch gekennzeichnet, dass** der Ringkörper (15) mit einem gewindefreien Abschnitt die Ringfläche (43) bildet, die mit dem ringförmigen Dichtelement (41) an der Innenfläche des Hohlkörpers (5) zusammenwirkt.

9. Armatur nach Anspruch 7 oder 8, **dadurch gekennzeichnet, dass** der Deckel (13) einen den Rand des Hohlkörpers (5) übergreifenden, sich radial erstreckenden Umfangsrand (14; 51) aufweist.

10. Armatur nach den Ansprüchen 5 und 9, **dadurch gekennzeichnet, dass** am Umfangsrand (14) eine Dichtfläche für die Zusammenwirkung mit der Dichtungsanordnung (11) am überstehenden Ende (7) des Hohlkörpers (5) vorgesehen ist.

11. Armatur nach Anspruch 9, **dadurch gekennzeichnet, dass** der Umfangsrand (51) des Deckels (13) einen über den Rand des Hohlkörpers (5) hinaus radial weiter vorspringenden Teil aufweist und dass an diesem eine Dichtungsanordnung (49) zur Bildung einer Abdichtung mit der die Öffnung (9) umgebenden Wand (3) des Behälters (1) vorgesehen ist.

12. Armatur nach einem der Ansprüche 1 bis 11, **dadurch gekennzeichnet, dass** der Hohlkörper (5) an seinem von der Öffnung (9) abgekehrten Ende (23) einen Sitz (33) für die Aufnahme eines Tank-Top-Filters (37) aufweist.

## Claims

1. A fitting for formation of a fluid-conveying connection on a container (1) made of plastic, in particular a tank for receiving a fluid, specifically a hydraulic fluid, having a container made of plastic and having a connection part in the form of a hollow element (5) with a jacket (21) which extends along a longitudinal axis of the hollow element (5) between the ends (7, 23) thereof, which hollow element (5) is embedded into the plastic of the wall (3) of the container (1) so that an open end (7) of the hollow element (5) on the edge of an opening (9) in the container (1) and at least one partial region of the jacket (21) of the hollow element (5) are enclosed by the plastic of the wall (3) of the container (1), **characterised in that** the hollow element (5) has, at a distance from the ends (7, 23) of such hollow element (5) a connecting branch (25) which, extending transversely to the longitudinal axis from the jacket (21), forms a fluid passage in the jacket (21) of the hollow element (5) and, extending to the exterior, penetrates the wall (3) of the container (1), and that the end (27) of the connecting branch (25) penetrating the wall (3) of the container (1) is configured to project outward beyond the exterior of the wall (3) of the container (1) and is embedded into the plastic of the wall (3) of the container (1) in such a way that the projecting part of the connecting branch (25) is enclosed at least partially in plastic

2. The fitting according to Claim 1, **characterised in that** the hollow element (5) is configured to be integral with the connecting branch (25) and is formed from a metallic material.

3. The fitting according to Claim 1 or 2, **characterised in that** the part of the connecting branch (25) extending from the inside of the wall (3) of the container (1) to the jacket (21) of the hollow element (5) is enclosed over its entire area on the exterior in plastic so that an uninterrupted plastic structure extends from the portion of material enclosing the jacket (21) of the hollow element (5) along the connecting branch (25) to the wall (3) of the container (1) and beyond the exterior of the container (1) along the projecting part of the connecting branch (25).

4. The fitting according to any of Claims 1 to 3, **characterised in that** the hollow element (5) is configured as a circular cylinder and has, a small distance from the end (7) associated with the opening (9) in the container (1), a flange (19) which is embedded into the plastic on the edge of the opening (9) so that it is totally enclosed externally by the portion of plastic material extending along the jacket (21) of the hollow element (5).

5. The fitting according to Claim 4, **characterised in that** the hollow element (5) is embedded in such a way that its end (7) projects outward beyond the edge of the opening (9) in the container (1) and that the projecting end (7) has a sealing configuration (11) for a sealing connection with a closing element (13) which may be positioned on the opening (9) in the container (1) in order to bring about closing.

6. The fitting according to Claim 4, **characterised in that** the hollow element (5) has, in its interior, in the vicinity of its end (7) associated with the opening (9) in the container (1), an annular groove as a seat for an annular sealing element (41), an annular groove which acts together with an annular surface (43) to bring about sealing, this surface (43) extending from a closing element (13) which may be attached to the opening (9) into the interior of the hollow element (5).

7. The fitting according to Claim 5 or 6, **characterised in that** there is provided as a closing element a cover (13) with a thread part (47) provided with exterior threading, such part being in the form of an annular element (15) which may be screwed into an interior threading (17) on the interior surface of the hollow element.

8. The fitting according to Claims 6 and 7, **characterised in that** the annular element (15) forms with an unthreaded section the annular surface (43) which works in conjunction with the annular sealing element (41) on the interior surface of the hollow element (5).

9. The fitting according to Claim 7 or 8, **characterised in that** the cover (13) has a radially extending circumferential edge (14; 51) which overlaps the edge of the hollow element (5).

10. The fitting according to Claims 5 and 9, **characterised in that** there is provided on the circumferential edge (14) a sealing surface to work in conjunction with the sealing configuration (11) on the projecting end (7) of the hollow element (5).

11. The fitting according to Claim 9, **characterised in that** the circumferential edge (51) of the cover (13) has a part projecting radially beyond the edge of the hollow element (5) and that there is provided on this part projecting radially a sealing configuration (49) for formation of a seal with the wall (3) of the container (1) enclosing the opening (9).

12. The fitting according to any of Claims 1 to 11, **characterised in that** the hollow element (5) has on its end (23) facing away from the opening (9) a seat (33) for holding a tank top filter (37).

## Revendications

1. Raccord pour la formation d'une connexion fluidique sur un récipient (1) en matière plastique, notamment sur une cuve de réception d'un fluide, notamment d'un fluide hydraulique, comprenant un récipient (1) en matière plastique et une partie de connexion sous la forme d'un corps (5) creux ayant une surface (21) latérale, qui s'étend le long d'un axe longitudinal du corps (5) creux entre des extrémités (7, 23) de celui-ci, lequel (5) corps creux est incorporé dans la matière plastique de la paroi (3) du récipient (1), de manière à ce qu'une extrémité (7) ouverte du corps (5) creux au bord d'une ouverture (9) du récipient (1) et au moins une zone partielle de la surface (21) latérale du corps (5) creux soient entourées de la matière plastique de la paroi (3) du récipient (1), **caractérisé en ce que** le corps (5) creux a à une certaine distance de ses extrémités (7, 23) une tubulure (25) de raccordement partant de la surface (21) latérale et s'étendant transversalement à l'axe longitudinal, tubulure qui forme dans la surface (21) latérale du corps (5) creux une traversée pour du fluide et qui s'étend vers l'extérieur en traversant la paroi (3) du récipient (1) et **en ce que** l'extrémité (27) traversant la paroi (3) du récipient (1) de la tubulure (25) de raccordement dépasse vers l'extérieur de la face extérieure de la paroi (3) du récipient (1) et est incorporée dans la matière plastique de la paroi (3) du récipient (1), de sorte que la partie de la tubulure (25) de connexion qui dépasse est entourée, au moins en partie, de matière plastique.

2. Raccord suivant la revendication 1, **caractérisé en ce que** le corps (5) creux est formé d'une seule pièce avec la tubulure (25) de raccordement et est en un matériau métallique.

3. Raccord suivant la revendication 1 ou 2, **caractérisé en ce que** la partie de la tubulure (25) de raccordement s'étendant de la face intérieure de la paroi (3) du récipient (1) jusqu'à la surface (21) latérale du corps (5) creux est entourée du côté extérieur sur toute la surface de matière plastique, de manière à ce qu'une structure en matière plastique ininterrompue à partir de la partie de matériau entourant la surface (21) latérale du corps (5) creux s'étende le long de la tubulure (25) de raccordement vers la paroi (3) du récipient (1) et au-delà de sa face extérieure, le long de la partie en dépassement, de la tubulure (25) de raccordement.

4. Raccord suivant l'une des revendications 1 à 3, **caractérisé en ce que** le corps (5) creux est conformé à la manière d'un cylindre de section circulaire et a, à une distance petite de l'extrémité (7) associée à l'ouverture (9) du récipient (1), une bride (19), qui est incorporée au bord de l'ouverture (9) dans la matière plastique, de manière à être entourée complètement du côté extérieur par la partie de la matière plastique s'étendant le long de la surface (21) latérale du corps (5) creux.

5. Raccord suivant la revendication 4, **caractérisé en ce que** le corps (5) creux est incorporé, de manière à ce que son extrémité (7) dépasse du bord de l'ouverture (9) du récipient (1) vers l'extérieur, et **en ce que** l'extrémité (7) en dépassement a un dispositif (11) d'étanchéité pour une liaison étanche avec un élément (13) de fermeture, qui pour la fermeture peut être mis sur l'ouverture (9) du récipient (1).

6. Raccord suivant la revendication 4, **caractérisé en ce que** le corps (5) creux a, à proximité de son extrémité (7) associé à l'ouverture (9) du récipient (1) dans sa surface intérieure, une rainure annulaire servant de siège pour un élément (41) d'étanchéité annulaire, qui coopère en étanchéité avec une surface (43) annulaire, qui s'étend à l'intérieur du corps (5) creux à partir d'un élément (13) de fermeture pouvant être mis sur l'ouverture (9).

7. Raccord suivant la revendication 5 ou 6, **caractérisé en ce qu'**il est prévu comme élément de fermeture un couvercle (13) ayant une partie (47) filetée munie d'un filetage sous la forme d'un corps (15) annulaire pouvant se visser dans un taraudage (17) de la surface intérieure du corps (5) creux.

8. Raccord suivant les revendications 6 et 7, **caractérisé en ce que** le corps (15) annulaire forme avec un segment sans filetage la surface (43) annulaire qui coopère avec l'élément (41) d'étanchéité annulaire sur la surface intérieure du corps (5) creux.

9. Raccord suivant la revendication 7 ou 8, **caractérisé en ce que** le couvercle (13) a un bord (14, 51) périphérique enjambant le bord du corps (5) creux et s'étendant radialement.

10. Raccord suivant les revendications 5 et 9, **caractérisé en ce qu'**au bord (14) périphérique est prévue une surface d'étanchéité destinée à coopérer avec un dispositif (11) d'étanchéité à l'extrémité (7) la plus en dépassement du corps (5) creux.

11. Raccord suivant la revendication 9, **caractérisé en ce que** le bord (51) périphérique du couvercle (13) a une partie davantage en saillie radialement dépassant du bord du corps (5) creux et **en ce que** sur celle-ci est prévu un dispositif (49) d'étanchéité pour la formation d'une étanchéité avec la paroi (3) du récipient (1) entourant l'ouverture (9).

12. Raccord suivant l'une des revendications 1 à 11, **caractérisé en ce que** le corps (5) creux a sur son extrémité (23) éloignée de l'ouverture (9) un siège (33) pour la réception d'un filtre (37) tank-top.
